# EUROPEAN PATENT SPECIFICATION

(11) **EP 3 901 938 B1**
(45) Date of publication and mention of the grant of the patent: **15.02.2023**
(21) Application number: 20776217.0
(22) Date of filing: 30.03.2020
(51) Int. Cl.: G09F 3/02, A41D 27/00, G09F 21/02

(54) **MARKER FOR OBJECTS THAT INDICATES THE DEGREE OF RELEASE INTO THE ENVIRONMENT OF ELEMENTS THAT ARE DIFFICULT OR SLOW TO BIODEGRADE (HARMFUL ELEMENTS)**
MARKER FÜR OBJEKTE, DER DEN GRAD DER FREISETZUNG IN DIE UMGEBUNG VON SCHWER ODER LANGSAM BIOLOGISCH ABBAUBAREN ELEMENTEN (SCHÄDLICHEN ELEMENTEN) ANZEIGT
MARQUEUR DU NIVEAU DE LIBÉRATION D'ÉLÉMENTS DIFFICILEMENT OU LENTEMENT BIODÉGRADABLES (ÉLÉMENTS NOCIFS) DANS LE MILIEU AMBIANT POUR DES OBJETS

(30) Priority: 29.03.2019 ES 201930292; 22.05.2019 ES 201930861 U
(43) Date of publication of application: 27.10.2021
(73) Proprietor: Nayco Management, S.L., 08022 Barcelona (ES); Augusto Bellini, S.L., 08015 Barcelona (ES)
(72) Inventor: COSTA BOTEY, José María, 08022 Barcelona (ES)
(74) Representative: Espiell Gomez, Ignacio
(86) International application number: PCT/ES2020/070212
(87) International publication number: WO 2020/201600

(56) References cited:
- WO-A1-86/03613
- WO-A2-2008/068418
- DE-A1-102006 031 138
- DE-A1-102006 031 138
- US-A1- 2001 049 890
- US-A1- 2014 115 748
- US-A1- 2014 115 748
- US-A1- 2018 089 617
- US-A1- 2018 089 617
- US-A1- 2018 146 735
- US-A1- 2018 146 735
- US-A1- 2018 310 658

## Description

### OBJECT OF THE INVENTION

The invention, as stated in the title of the present specification, relates to a marker, indicator or signal of the degree of release of elements that are difficultly or slowly biodegradable (harmful elements) into the environment for objects such as clothing, footwear, accessories, bed linens, personal protective equipment (PPE), which contributes, to the function for which it is intended, benefits and features described in detail later.

The object of the present invention falls within a marker which is applicable to be incorporated, either during the manufacturing process or at a time after the manufacturing process thereof, in an object susceptible to showing wear from use, washing and/or processes derived from cleaning (for example soaking, soaping and rinsing) such as articles of clothing, footwear, accessories, bed linens, which has a variable structure in a manner correlative, equal or similar to the degree of release of the elements that are difficultly or slowly biodegradable to be studied.

Thus, the marker, by being incorporated into the object that releases the elements that are difficultly or slowly biodegradable, enables the user to be warned about the degree of release of the object and to make them notice that the object must not be used anymore in order to proceed to the recommended recycling thereof in order to prevent the object from entering the phase wherein the deterioration is exponential, in other words, the deterioration is accelerated or is more pronounced than in the previous phase, which is when a large number of harmful elements are released, which are dangerous for the ecosystem due to the slow biodegradation thereof. Furthermore, in a preferred embodiment, the element enables the user to access certain information when the article enters the phase wherein the release of harmful elements is exponential, information that was previously not accessible for the user.

### FIELD OF APPLICATION OF THE INVENTION

The field of application of the present invention falls within the sector of the industry dedicated to manufacture objects which release harmful elements due to use and/or washing, focusing particularly on the field of articles of clothing, footwear, accessories, bed linens, personal protective equipment (PPE), etc.

### BACKGROUND OF THE INVENTION

As is known, objects generally have a rate of release of elements that are difficultly or slowly biodegradable (harmful elements) into the environment which is linear until it reaches a point where the rate of release of elements that are difficultly or slowly biodegradable (harmful elements) becomes exponential or accelerated. In the phase of exponential or accelerated release, the release of the elements is much faster than in the linear release phase, so it would be interesting to avoid using and/or washing the object when it is in the exponential or accelerated release phase.

For example, the articles or sheets made using spun threads or other elements which contain artificial and/or synthetic fibres, among others: polyester, artificial polyamides or acrylic fibres, by nature, there comes a time when they fatigue and break at a much higher rate generating microparticles and/or microfibres that, either by use or by continuous washing, are released into the environment for example by wear caused by friction or when the article of clothing is washed.

The articles, shoes or sheets made with spun threads from natural fibres such as cotton, linen, etc. when they are used and/or washed they also release microparticles and/or microfibres, but given the organic (not artificial) nature thereof, they do not generate a large environmental problem since they are easily biodegradable.

The problem appears when said articles are manufactured with elements that are artificial and/or synthetic (non-natural elements), since they are not easily biodegradable (harmful elements), as soon as they are released into the environment in the form of microparticles and/or microfibres and consequently they are not processed/destroyed correctly, inevitably reaching the marine fauna. Consequently, said marine fauna is contaminated (for example, microfibres have been detected in the livers and viscera of certain marine animals such as molluscs, fish and also birds).

The release of elements that are difficultly or slowly biodegradable (harmful elements) is not detectable to the naked eye of the user unlike other functional characteristics of the object, such as the elasticity of an article. A user can easily detect if an article has reached the end of the useful life thereof, for example, when observing that the article has stopped being elastic, but a user cannot easily detect whether the article is releasing elements that are difficultly or slowly biodegradable (harmful elements) at an exponential or accelerated rate.

By way of example, the sets of personal protective equipment incorporating reflective elements release reflective particles (particles that are synthetic and therefore difficultly biodegradable) and consequently lose the ability to reflect as the personal protective equipment is washed. Nevertheless, the decrease in reflective capacity is not visible to the naked eye when the user looks at high-visibility personal protective equipment such as reflective vests, trousers, polo shirts, jackets or shirts with high visibility. Only by means of analysis in a laboratory can it be determined that a set of personal protective equipment is no longer sufficiently reflective and therefore no longer fulfils the purpose thereof. There is a regulation that establishes that personal protective equipment that incorporates reflective elements must be replaced after a certain period of time in order to prevent them from continuing to be used when they are no longer sufficiently reflective. The time during which a high-visibility personal protective equipment offers the required degree of reflectance is estimated, meaning that equipment that may not have lost the reflective capacity thereof yet is withdrawn from the market.

It would be desirable, therefore, to be able to have a means of warning the user when an object, such as an article of clothing or personal protective equipment, will enter the phase of exponential or accelerated release of elements that are difficultly or slowly biodegradable (harmful elements) in order to prevent said object from continuing to be used and consequently washed and thus prevent said harmful elements from being released in an exponential or accelerated manner.

In conclusion, it would be interesting to have a marker which warns the user that an object has reached the end of the non-polluting or low-polluting life thereof, a moment which occurs before the object reaches the end of the useful life thereof which is when the user realises without help that the object can no longer be used.

Moreover, the aim of the present invention is to provide said warning means by means of developing a marker of the degree of release of elements that are difficultly or slowly biodegradable (harmful elements) into the environment of objects.

Secondly, the objective of the present invention is to enable the user to access certain information, for example, information about aspects related to the object itself, in particular about the recycling thereof so that the user can carry it out in the best possible way, only when the article has entered the phase of exponential release of harmful elements.

Moreover, and as a reference to the current state of the art, it should be noted that the applicant at least is unaware of the existence of any other marker of the degree of release of elements that are difficultly or slowly biodegradable (harmful elements) into the environment for objects, or any other invention with a similar application, that has technical and structural features that are the same as or similar to those that this invention claims.

US2014115748 discloses a marker of the degree of wear due to use and/ or washing of an object made by artificial and/or synthetic fibres, that is characterised in that it consists of an element comprising a variable structure which is modified at a rate in accordance with the wear of the object, warning the user when the object is at the end of its life cycle, where said element comprises two layers, a surface one and a central or lower one and in that the variation of the structure of the element is by means of erosion or wear of a surface layer which when it disappears causes a central layer to be accessible by the user.

### EXPLANATION OF THE INVENTION

The marker of the degree of release of elements that are difficultly or slowly biodegradable (harmful elements) into the environment for objects that the invention proposes is configured as a suitable solution to the aforementioned problem, the characterising details that make it possible and distinguish it being conveniently included in the final claims accompanying this description.

Specifically, what the invention proposes, as noted above, is an element that is intended to be incorporated into an object that may show wear due to use and washing and be potentially harmful to the environment when releasing elements that are difficultly biodegradable (harmful elements), such as textile articles, footwear, accessories, bed linens or personal protective equipment (PPE) made from artificial or unnatural fibres.

The marker object of the patent has a structure which varies in a manner correlative to the release of elements that are difficultly or slowly biodegradable (harmful elements) from the object wherein it is incorporated such that it warns the user when the object is going to enter the phase of exponential or accelerated wear in order to prevent the elements from being released in an accelerated manner in future washes.

The variation of the structure is the erosion of a surface layer which when it disappears causes a central layer to be accessible by the user. Said central layer, in order to warn the user, can have another colour, sound quality, level of roughness or even incorporate an olfactory component which is released when it comes into contact with air.

Thus, for example, when the element varies the structure thereof and causes a change in colour, texture, thickness or even disappearing, as the object wherein it is incorporated is worn out based on a certain use, either by friction or the number of washes to which it is subjected, the element acts as a marker to warn the user of the object about the degree of wear thereof in order to make them notice that the object will enter the exponential wear phase and thus prevent harmful elements from being released in future uses and/or washes.

Furthermore, said marker element will be designed, in each case, with one type of structure or another depending on the type of object wherein it is incorporated and the harmful element it releases. For example, if the element is intended to be incorporated into an article of clothing made of fibres or spun threads containing polyester or synthetic polyamide (potentially harmful element), the structure of the element will vary in a manner correlative or similar to the wear of the polyester so as to warn the user when the polyester is going to enter the exponential wear phase in order to prevent the polyester from being released in the form of microfibres into the environment in future washes.

In one embodiment option of the invention, the marker element of the degree of release of elements that are difficultly or slowly biodegradable (harmful elements) into the environment is a button comprising two layers, a surface one and a central or lower one, which are noticeably different in appearance, for example with a different colour, the external layer being "able to be worn out" with use and washes at a rate consistent with the deterioration of the fabric with which the article for which it is intended is made, such that, when washing the article incorporating said button, the surface layer will wear out at the same rate that the article loses or releases microparticles, until it disappears, revealing the central layer, when the useful life of the article has come to an end as it has already undergone a deterioration that is potentially dangerous for the environment and, therefore, the recycling thereof is advisable.

In another variant of an embodiment of the invention, the marker for the degree of release of elements that are difficultly or slowly biodegradable (harmful elements) into the environment is a label, strap, embroidery or mark comprising two layers, a surface one and a central or lower one, which are noticeably different in appearance, for example with a different colour, the outer layer being "able to be worn out" with use and washes according to the rate of deterioration undergone by the fabric of the article, such that, when washing the article incorporating said label, the surface layer will be worn out at the same rate as the article until it disappears, revealing the central or lower layer.

Another embodiment option of the invention consists of the marker element of the degree of release of elements that are difficultly or slowly biodegradable (harmful elements) into the environment of the article being a thread with a double layer incorporated in some portion thereof, either visible or hidden, the outer layer of the thread having a nature "able to be worn out" with use and washes in accordance with the deterioration of the fabric of the article being such that when the article is washed, the outer layer of the thread will be worn out at the same rate as the article until it disappears and reveals the central or lower layer, indicating that the useful life of the article has come to an end.

In a preferred embodiment, the element with a variable structure due to wear comprises, incorporated in the central or lower layer that remains accessible after the disappearance of the surface layer, an informative element which is only accessible when said disappearance of the surface layer occurs.

The mentioned informative element can be a scannable or readable code, such as a QR code, a BIDI code, a barcode, an alphanumeric combination, a telephone number, an email address or any other similar element, printed on the surface of said central layer, such that until it is fully in view, it cannot be correctly scanned or read and the information it sends us cannot be accessed, for example, through a website or phone number.

Alternatively, or in a complementary manner, the aforementioned informative element incorporating the central layer is a passive electronic label which is only readable when it is excited by an electronic device suitable to do so, when the surface layer that can be worn out is gone. In this case, said surface layer must be made of a material of a type or thickness sufficient so that, as long as it has not disappeared, it determines a barrier for blocking electronic waves in order to prevent the passive label from being excited and from emitting the information thereof.

The information about the object containing the informative element can be of a different kind, but preferably it is related to the recycling thereof, such as instructions for breaking up the object for better recycling or places for recycling or even payments if recycled.

Information accessible once the wear layer is removed can be read or scanned by the recycling entity, the entity which sold said article, the managing body of the computer system or any other body decided in order to determine if the object is apt to be recycled or not.

### DESCRIPTION OF THE DRAWINGS

To complete the description, and for the purpose of helping to make the features of the invention more readily understandable, this description is accompanied by a set of drawings constituting an integral part of the same, which by way of illustration and not limitation represents the following:
Figure 1 shows a schematic view of an article of clothing equipped with several examples of the marker of the degree of release of elements that are difficultly or slowly biodegradable (harmful elements) into the environment for objects, of the invention, specifically one in the form of a label, another in the form of a button and another in the form of a seam;
Figure 2 shows a cross-sectional view of an example of the marker of the degree of release of elements that are difficultly or slowly biodegradable (harmful elements) into the environment, according to the invention, in this case as a button, showing the parts it comprises;
Figures 3 and 4 show corresponding plan views of the button shown in the previous figure, shown without wear and partially worn out, respectively;
Figure 5-A shows a cross-sectional schematic view of another example of the marker of the degree of release of elements that are difficultly or slowly biodegradable (harmful elements) into the environment, specifically an example as a label, showing the configuration thereof;
Figure 5-B shows an enlarged view of the detail A indicated in figure 5-A, which enables the two layers comprised by the label to be seen better; and
Figures 6 and 7 show corresponding plan views of the label shown in the previous figures, shown without wear and partially worn out;
Figure 8 shows a label, which has been shown with the surface layer partially worn out, enabling the informative element incorporated by the surface of the central or lower layer of the same to be seen, in an option thereof as a QR label; and
Figure 9 shows a label, similar to the one shown in figure 8, but in this case with a passive electronic label as an example of informative elements incorporated by the central layer.
Figure 10 shows by means of a graph the evolution of the number of particles released (lower line) and the evolution of the visual appearance of the article (upper line) as a function of the number of washes that an article undergoes.

### PREFERRED EMBODIMENT OF THE INVENTION

In light of the aforementioned figures, and according to the numbering adopted, a non-limiting exemplary embodiment can be seen therein of the marker element of the degree of release of elements that are difficultly or slowly biodegradable (harmful elements) into the environment for objects susceptible to wearing out due to use and washing and consequently releasing elements that are difficultly biodegradable (harmful elements) into the environment, such as textile articles, footwear, accessories, bed linens or personal protective equipment (PPE), which comprises what is described in detail below.

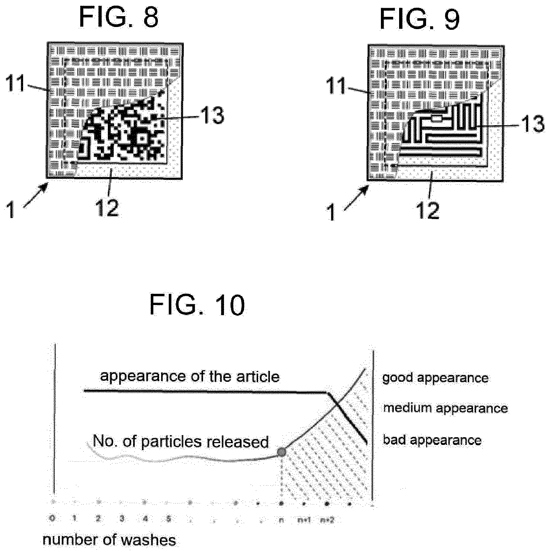

The release of elements that are difficultly or slowly biodegradable (harmful elements) into the environment follows a linear rate until it reaches a point where the rate becomes exponential or accelerated as shown in figure 10. In the phase of exponential or accelerated release, the release of the elements is much faster than in the linear release phase, so it would be interesting to avoid using and/or washing the object when it is in the exponential or accelerated release phase. In this figure it can also be seen that the user can only see that the article has lost the functionality thereof (physical appearance), such as the elasticity, much later than the moment when the rate of release of harmful elements changes from linear to exponential or accelerated. A user could wrongly associate that the moment when the rate of release of harmful elements changes from linear to exponential or accelerated occurs when the article loses the functionality thereof (physical appearance). This assumption is wrong since the change in the rate of release of harmful elements occurs before the loss of functionality and therefore if the article is removed when it loses the functionality thereof, the article has been releasing harmful elements at an exponential or accelerated rate for a long time, and therefore contamination has not been prevented.

Thus, as seen in said figures, the marker element of the invention intended to be incorporated into an object, such as an article (2) of clothing made with a fabric susceptible to releasing elements that are difficultly or slowly biodegradable (harmful elements) due to use and washes, consists of an element (1, 1', 1") equipped with a structure that is variable at a rate in accordance with the wear of the fabric of the article (2), warning the user about it.

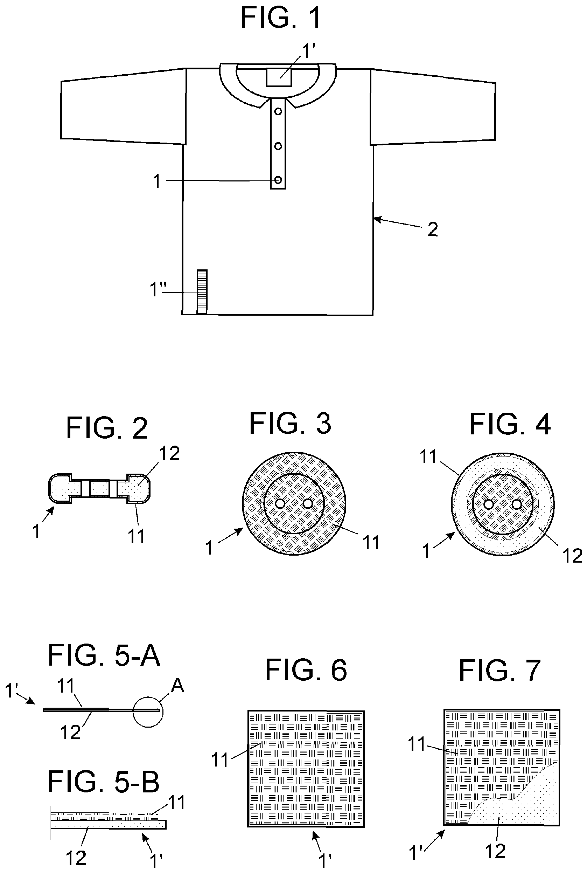

Taking into account figures 2 to 4 it is observed how, in an embodiment option, said element is a button (1) comprising two layers, a surface one (11) and a central or lower one (12), the external layer (11) being "able to be worn out" to the point of disappearing, due to friction with use and washes, at a rate in accordance with the deterioration of the fabric of the article (2) for which it is intended.

The variation of the structure can be the erosion or wear of a surface layer (11) which when it disappears causes a central layer to be accessible by the user. Said central layer (12), in order to warn the user, can have another colour, sound quality, level of roughness than the surface layer (11) or even incorporate an olfactory component which is released when it comes into contact with air.

Taking into account figures 5-A to 7 it is observed how, in another embodiment option, the marker element of the degree of release of elements that are difficultly or slowly biodegradable (harmful elements) into the environment consists of a label (1') comprising two layers, a surface one (11) and a central or lower one (12), which are noticeably different in appearance, for example with a different colour, the external layer (11) being "able to be worn out" to the point of being able to disappear, due to friction with use and due to washes, at a rate in accordance with the deterioration of the fabric of the article (2) for which it is intended.

In another variant of an embodiment, represented in the article (2) of figure 1, the marker element of the degree of release of elements that are difficultly or slowly biodegradable (harmful elements) into the environment consists of a thread (1") incorporated in some portion thereof, either visible or hidden, comprising two layers, a surface one (11) and a central or lower one (12), which are noticeably different in appearance, for example with a different colour, the external layer (11) being "able to be worn out" to the point of being able to disappear, due to friction with use and due to washes, at a rate in accordance with the deterioration of the fabric of the article (2) for which it is intended.

In a preferred embodiment, the central or inner layer (12) in turn comprises an informative element (13) with information accessible only when the surface layer (11) has disappeared.

In an embodiment option such as the one shown in figure 8, the informative element (13) is a scannable or readable code, for example, a QR code or BIDI code or barcode printed on the surface of the central or lower layer (12), such that until it is completely visible due to the disappearance of the surface layer (11), it cannot be correctly scanned and he information it sends when scanned cannot be accessed.

And figure 9 shows another embodiment option, wherein the informative element (13) incorporated by the central or lower layer (12) is a passive electronic label which is only readable when the surface layer (11) has completely disappeared. In this case, the surface layer (11) is made of a material and/or thickness such that, while it has not disappeared, it blocks the excitation of the electronic label, preventing it from emitting the information contained therein.

## Claims

1. A marker of the degree of release of elements that are difficultly or slowly biodegradable (harmful elements) into the environment for objects (2) which release elements that are difficultly or slowly biodegradable (harmful elements) into the environment due to use and/or washing, is **characterised in that** it consists of an element (1, 1', 1") comprising a variable structure which is modified at a rate in accordance with the degree of release of elements that are difficultly or slowly biodegradable (harmful elements) into the environment of the object (2), warning the user when the object is going to enter the phase of exponential or accelerated release of elements that are difficultly or slowly biodegradable, where said element (1, 1', 1") comprises two layers, a surface one (11) and a central or lower one (12) and **in that** the variation of the structure of the element (1, 1', 1") is by means of erosion or wear of a surface layer (11) which when it disappears causes a central layer (12) to be accessible by the user.

2. The marker of the degree of release of elements that are difficultly or slowly biodegradable (harmful elements) into the environment for objects, according to claim 1, wherein said element is a button (1) comprising two layers, a surface one (11) and a central or lower one (12).

3. The marker of the degree of release of elements that are difficultly or slowly biodegradable (harmful elements) into the environment for objects, according to claim 1, wherein said element is a label (1') comprising two layers, a surface one (11) and a central or lower one (12).

4. The marker of the degree of release of elements that are difficultly or slowly biodegradable (harmful elements) into the environment for objects, according to claim 1, wherein said element is a thread (1") comprising two layers, a surface one (11) and a central or lower one (12).

5. The marker of the degree of release of elements that are difficultly or slowly biodegradable (harmful elements) into the environment for objects, according to any of the preceding claims, wherein the surface layer (11) and the central or lower layer (12) have different colours.

6. The marker of the degree of release of elements that are difficultly or slowly biodegradable (harmful elements) into the environment for objects, according to any of the preceding claims, wherein the surface layer (11) and the central or lower layer (12) have different levels of roughness.

7. The marker of the degree of release of elements that are difficultly or slowly biodegradable (harmful elements) into the environment for objects, according to any of the preceding claims, wherein the surface layer (11) and the central or lower layer (12) have different sound qualities.

8. The marker of the degree of release of elements that are difficultly or slowly biodegradable (harmful elements) into the environment for objects, according to any of the preceding claims, wherein the central or lower layer (12) comprises an olfactory component which is released when it comes into contact with air.

9. The marker of the degree of release of elements that are difficultly or slowly biodegradable (harmful elements) into the environment for objects, according to any of the preceding claims, wherein the central or inner layer (12) comprises an informative element (13) incorporated on the surface thereof with information accessible only when the surface layer (11) has disappeared.

10. The marker of the degree of release of elements that are difficultly or slowly biodegradable (harmful elements) into the environment for objects, according to claim 9, wherein the informative element (13) incorporated on the surface thereof with information is accessible only when the surface layer (11) has disappeared is a scannable or readable code.

11. The marker of the degree of release of elements that are difficultly or slowly biodegradable (harmful elements) into the environment for objects, according to claim 10, wherein the informative element (13) is a QR or BIDI code.

12. The marker of the degree of release of elements that are difficultly or slowly biodegradable (harmful elements) into the environment for objects, according to claim 10, wherein the informative element (13) is a passive electronic label; and in that the surface layer (1) is made of material and/or thickness such that, while it has not disappeared, it blocks the excitation of the electronic label preventing it from emitting the information contained therein.

13. A use of the marker of any of the preceding claims to detect the entry of the objects into the phase of exponential or accelerated release of elements that are difficultly or slowly biodegradable.

## Patentansprüche

1. Marker für den Grad der Freisetzung von biologisch schwer oder langsam abbaubaren Elementen (schädlichen Elementen) in die Umwelt für Gegenstände (2), die durch Verwendung und/oder Waschen biologisch schwer oder langsam abbaubare Elemente (schädliche Elemente) in die Umwelt freisetzen, **dadurch gekennzeichnet, dass** er aus einem Element (1, 1', 1") besteht, das eine variable Struktur umfasst, die entsprechend dem Grad der Freisetzung von biologisch schwer oder langsam abbaubaren Elementen (schädlichen Elementen) in die Umwelt des Gegenstands (2) modifiziert wird, die den Benutzer warnt, wenn der Gegenstand in die Phase der exponentiellen oder beschleunigten Freisetzung von biologisch schwer oder langsam abbaubaren Elementen eintritt, wobei das Element (1, 1', 1") zwei Schichten umfasst, eine Oberflächenschicht (11) und eine mittlere oder untere Schicht (12), und dass die Änderung der Struktur des Elements (1, 1', 1") durch Erosion oder Verschleiß einer Oberflächenschicht (11) erfolgt, die wenn es verschwindet, eine mittlere Schicht (12) für den Benutzer zugänglich macht.

2. Marker für den Grad der Freisetzung von biologisch schwer oder langsam abbaubaren Elementen (schädlichen Elementen) in die Umwelt für Gegenstände nach Anspruch 1, wobei das Element ein Knopf (1) ist, der zwei Schichten umfasst, eine Oberflächenschicht (11) und eine mittlere oder untere Schicht (12).

3. Marker für den Grad der Freisetzung von biologisch schwer oder langsam abbaubaren Elementen (schädlichen Elementen) in die Umwelt für Gegenstände nach Anspruch 1, wobei das Element ein Etikett (1') ist, der zwei Schichten umfasst, eine Oberflächenschicht (11) und eine mittlere oder untere Schicht (12).

4. Marker für den Grad der Freisetzung von biologisch schwer oder langsam abbaubaren Elementen (schädlichen Elementen) in die Umwelt für Gegenstände nach Anspruch 1, wobei das Element ein Faden (1") ist, der zwei Schichten umfasst, eine Oberflächenschicht (11) und eine mittlere oder untere Schicht (12).

5. Marker für den Grad der Freisetzung von biologisch schwer oder langsam abbaubaren Elementen (schädlichen Elementen) in die Umwelt für Gegenstände nach einem der vorhergehenden Ansprüche, wobei die Oberflächenschicht (11) und die mittlere oder untere Schicht (12) unterschiedliche Farben aufweisen.

6. Marker für den Grad der Freisetzung von biologisch schwer oder langsam abbaubaren Elementen (schädlichen Elementen) in die Umwelt für Gegenstände nach einem der vorhergehenden Ansprüche, wobei die Oberflächenschicht (11) und die mittlere oder untere Schicht (12) unterschiedliche Rauhigkeitsgrade aufweisen.

7. Marker für den Grad der Freisetzung von biologisch schwer oder langsam abbaubaren Elementen (schädlichen Elementen) in die Umwelt für Gegenstände nach einem der vorhergehenden Ansprüche, wobei die Oberflächenschicht (11) und die mittlere oder untere Schicht (12) unterschiedliche Klangqualitäten aufweisen.

8. Marker für den Grad der Freisetzung von biologisch schwer oder langsam abbaubaren Elementen (schädlichen Elementen) in die Umwelt für Gegenstände nach einem der vorhergehenden Ansprüche, wobei die mittlere oder untere Schicht (12) eine olfaktorische Komponente umfasst, die bei Kontakt mit Luft freigesetzt wird.

9. Marker für den Grad der Freisetzung von biologisch schwer oder langsam abbaubaren Elementen (schädlichen Elementen) in die Umwelt für Gegenstände nach einem der vorhergehenden Ansprüche, wobei die mittlere oder untere Schicht (12) ein auf dessen Oberfläche eingearbeitetes informatives Element (13) mit Informationen, die nur zugänglich sind, wenn die Oberflächenschicht (11) verschwunden ist, umfasst.

10. Marker für den Grad der Freisetzung von biologisch schwer oder langsam abbaubaren Elementen (schädlichen Elementen) in die Umwelt für Gegenstände nach Anspruch 9, wobei das auf dessen Oberfläche eingearbeitete informative Element (13) mit Informationen, die nur zugänglich sind, wenn die Oberflächenschicht (11) verschwunden ist, ein scannbarer oder lesbarer Code ist.

11. Marker für den Grad der Freisetzung von biologisch schwer oder langsam abbaubaren Elementen (schädlichen Elementen) in die Umwelt für Gegenstände nach Anspruch 10, wobei das informative Element (13) ein QR- oder BIDI-Code ist.

12. Marker für den Grad der Freisetzung von biologisch schwer oder langsam abbaubaren Elementen (schädlichen Elementen) in die Umwelt für Gegenstände nach Anspruch 10, wobei das informative Element (13) ein passives elektronisches Etikett ist; und dadurch, dass die Oberflächenschicht (1) aus einem solchen Material und/oder einer solchen Dicke hergestellt ist, dass sie zwar nicht verschwunden ist, aber die Erregung des elektronischen Etiketts blockiert, wodurch verhindert wird, dass es die darin enthaltenen Informationen aussendet.

13. Verwendung des Markers nach einem der vorhergehenden Ansprüche, um den Eintritt der Gegenstände in die Phase der exponentiellen oder beschleunigten Freisetzung von biologisch schwer oder langsam abbaubaren Elementen festzustellen.

## Revendications

1. Marqueur du degré de libération d'éléments difficilement ou lentement biodégradables (éléments nocifs) dans l'environnement pour des objets (2) qui libèrent des éléments difficilement ou lentement biodégradables (éléments nocifs) dans l'environnement du fait de l'utilisation et/ou du lavage, **caractérisé en ce qu'**il est constitué d'un élément (1, 1', 1") comprenant une structure variable qui se modifie à un rythme fonction du degré de libération d'éléments difficilement ou lentement biodégradables (éléments nocifs) dans l'environnement de l'objet (2), avertissant l'utilisateur lorsque l'objet va entrer dans la phase de libération exponentielle ou accélérée d'éléments difficilement ou lentement biodégradables, où ledit élément (1, 1', 1") comprend deux couches, une de surface (11) et une centrale ou inférieure (12) et **en ce que** la variation de la structure de l'élément (1, 1', 1") se fait au moyen de l'érosion ou de l'usure d'une couche de surface (11) qui lorsqu'elle disparaît, amène une couche centrale (12) à devenir accessible à l'utilisateur.

2. Marqueur du degré de libération d'éléments difficilement ou lentement biodégradables (éléments nocifs) dans l'environnement pour des objets, selon la revendication 1, dans lequel ledit élément est un bouton (1) comprenant deux couches, une de surface (11) et une centrale ou inférieure (12).

3. Marqueur du degré de libération d'éléments difficilement ou lentement biodégradables (éléments nocifs) dans l'environnement pour des objets, selon la revendication 1, dans lequel ledit élément est une étiquette (1') comprenant deux couches, une de surface (11) et une centrale ou inférieure (12).

4. Marqueur du degré de libération d'éléments difficilement ou lentement biodégradables (éléments nocifs) dans l'environnement pour des objets, selon la revendication 1, dans lequel ledit élément est un fil (1") comprenant deux couches, une de surface (11) et une centrale ou inférieure (12).

5. Marqueur du degré de libération d'éléments difficilement ou lentement biodégradables (éléments nocifs) dans l'environnement pour des objets, selon l'une quelconque des revendications précédentes, dans lequel la couche de surface (11) et la couche centrale ou inférieure (12) ont des couleurs différentes.

6. Marqueur du degré de libération d'éléments difficilement ou lentement biodégradables (éléments nocifs) dans l'environnement pour des objets, selon l'une quelconque des revendications précédentes, dans lequel la couche de surface (11) et la couche centrale ou inférieure (12) ont des niveaux de rugosité différents.

7. Marqueur du degré de libération d'éléments difficilement ou lentement biodégradables (éléments nocifs) dans l'environnement pour des objets, selon l'une quelconque des revendications précédentes, dans lequel la couche de surface (11) et la couche centrale ou inférieure (12) ont des qualités sonores différentes.

8. Marqueur du degré de libération d'éléments difficilement ou lentement biodégradables (éléments nocifs) dans l'environnement pour des objets, selon l'une quelconque des revendications précédentes, dans lequel la couche centrale ou inférieure (12) comprend un composant olfactif qui est libéré lorsqu'il entre en contact avec l'air.

9. Marqueur du degré de libération d'éléments difficilement ou lentement biodégradables (éléments nocifs) dans l'environnement pour des objets, selon l'une quelconque des revendications précédentes, dans lequel la couche centrale ou intérieure (12) comprend un élément informatif (13) incorporé à sa surface avec une information accessible uniquement lorsque la couche de surface (11) a disparu.

10. Marqueur du degré de libération d'éléments difficilement ou lentement biodégradables (éléments nocifs) dans l'environnement pour des objets, selon la revendication 9, dans lequel l'élément informatif (13) incorporé sur sa surface avec des informations n'est accessible que lorsque la couche de surface (11) a disparu est un code pouvant être balayé ou lisible.

11. Marqueur du degré de libération d'éléments difficilement ou lentement biodégradables (éléments nocifs) dans l'environnement pour des objets, selon la revendication 10, dans lequel l'élément informatif (13) est un code QR ou BIDI.

12. Marqueur du degré de libération d'éléments difficilement ou lentement biodégradables (éléments nocifs) dans l'environnement pour des objets, selon la revendication 10, dans lequel l'élément informatif (13) est une étiquette électronique passive ; et en ce que la couche de surface (1) est réalisée dans un matériau et/ou une épaisseur tels que, tant qu'elle n'a pas disparue, elle bloque l'excitation de l'étiquette électronique, l'empêchant d'émettre les informations qu'elle contient.

13. Utilisation du marqueur selon l'une quelconque des revendications précédentes pour détecter l'entrée des objets dans la phase de libération exponentielle ou accélérée d'éléments difficilement ou lentement biodégradables.
